# EUROPÄISCHE PATENTSCHRIFT

(11) **EP 4 065 765 B1**
(45) Veröffentlichungstag und Bekanntmachung des Hinweises auf die Patenterteilung: **02.08.2023**
(21) Anmeldenummer: 20761174.0
(22) Anmeldetag: 19.08.2020
(51) Int. Cl.: D21C 7/06, D21B 1/22, B30B 9/12, B30B 11/24

(54) **VORRICHTUNG UND VERFAHREN ZUR ABDICHTUNG EINES ÜBERDRUCKBEREICHS**
DEVICE AND METHOD FOR SEALING AN OVERPRESSURE AREA
DISPOSITIF ET PROCÉDÉ POUR ÉTANCHER UNE ZONE DE SURPRESSION

(30) Priorität: 25.11.2019 AT 510142019
(43) Veröffentlichungstag der Anmeldung: 05.10.2022
(73) Patentinhaber: Andritz AG, 8045 Graz (AT)
(72) Erfinder: ULM, Dietmar, 2384 Breitenfurt (AT)
(86) Internationale Anmeldenummer: PCT/EP2020/073174
(87) Internationale Veröffentlichungsnummer: WO 2021/104692

(56) Entgegenhaltungen:
- WO-A1-2015/081443
- WO-A1-2016/036300
- US-A1- 2018 022 554

## Beschreibung

Die Erfindung betrifft ein Verfahren zur Förderung eines Förderguts, z.B. Hackschnitzel, in einen Überdruckbereich oder aus einem Überdruckbereich, wobei das Fördergut dem Überdruckbereich über eine erfindungsgemäße Stopfschnecke zugeführt wird und/oder aus dem Überdruckbereich über die Stopfschnecke ausgeführt wird, die Stopfschnecke das Fördergut in einem Einlassbereich aufnimmt, eine in einem Gehäuse um eine Rotationsachse rotierende Schnecke das Fördergut zu einem Austrittsbereich fördert, wobei das Fördergut zwischen einer Spule und der Schnecke zu einem gasdichten und flüssigkeitsdichten Stopfen verdichtet wird, und zur Förderung des Förderguts in den Überdruckbereich der Stopfen dem Überdruckbereich zugeführt wird und/oder zur Förderung des Förderguts aus dem Überdruckbereich das zu dem Stopfen verdichtete Fördergut aus dem Überdruckbereich ausgeführt wird, wobei der Stopfen den Überdruckbereich gegen die Stopfschnecke abdichtet. Die Erfindung betrifft auch eine Vorrichtung zur Förderung eines Förderguts in einen oder aus einem Überdruckbereich, wie es im Oberbegriff des Anspruchs 6 angegeben ist.

Stopfschnecken finden Verwendung zur Entwässerung eines Förderguts durch Komprimierung, aber insbesondere auch um eine Druckabdichtung zwischen zwei Prozessschritten, die auf unterschiedlichem Druckniveau liegen, zu erzielen. Zur Druckabdichtung umfasst ein Prozessschritt die Förderung des Förderguts in der Stopfschnecke von einem Einlassbereich zu einem Austrittsbereich, unter Ausbildung des Förderguts zu einem gasdichten und flüssigkeitsdichten Stopfen. Dabei ist bei Förderung in einen Überdruckbereich der Austrittsbereich der Stopfschnecke an den Überdruckbereich angebunden bzw. bei Förderung aus einem Überdruckbereich ist der Einlassbereich der Stopfschnecke an den Überdruckbereich angebunden. Somit erlaubt das Fördergut selbst die Druckabdichtung zwischen den Prozessschritten, wobei ein Prozessschritt den Überdruckbereich umfasst, der z.B. als Druckbehälter, Reaktor, Kocher, etc. ausgeführt ist. Typische Anwendungen dazu finden sich im Papier und Zellstoffbereich, wie auch generell in der Verarbeitung von Faserstoffen, z.B. Holzfasern, und dort beispielsweise in der Herstellung von Faserstoffplatten, MDF, etc. Eine weitere Verwendung ist im Bereich der Herstellung von Bio-Kraftstoffen gegeben, wobei z.B. Bio-Ethanol aus Biomasse, umfassend Getreide, Mais oder Zuckerrübe hergestellt werden kann.

Stopfschnecken umfassen typischerweise ein Gehäuse sowie eine im Inneren um eine Rotationsachse drehbar angeordnete Schnecke, wobei die Schnecke zumindest teilweise eine Wendel aufweist und wobei das Fördergut in dem sich verjüngenden Bereich zwischen Gehäuse und Schnecke zunehmend komprimiert wird. Im Austrittsbereich der Stopfschnecke ist die Schnecke zur Ausbildung des Stopfens zumindest teilweise wendelfrei ausgebildet. Das Gehäuse kann im Bereich der Schnecke Öffnungen aufweisen um eine Entwässerung des Förderguts durch Komprimierung zu erlauben. Herkömmliche Stopfschnecken können mit einem zylindrischen Gehäuse zusammen mit einer Schnecke mit zylindrischer Außenkontur ausgebildet werden, andere Gehäuseformen, mit z.B. konischer Außenkontur, sind ebenso möglich.

In der EP 2 817 449 B1 ist ein System zur Handhabung eines holzfreien Pflanzenmaterials beschrieben. Weiter wird beschrieben, dass Stopfschnecken zur Beschickung von Kochern mit Hackschnitzel verwendet werden, wobei die Stopfschnecke eine Spule ("plug pipe") mit konstantem inneren Durchmesser am Ende der Stopfschnecke umfasst. Die EP 2 817 449 B1 hat unter anderem zum Ziel, eine Stopfschneckenanordnung zu offenbaren, die die Gefahr des Rückströmens von Dampf aus dem Überdruckbereich minimiert und somit die Druckabdichtung optimiert. Dies wird durch ein Zusammenspiel eines Stopfschneckenförderers und einer Zwangszuführschnecke erzielt.

In der WO 2016/036300 A1 ist eine Stopfschneck zur Behandlung von lignozellulosem Material beschrieben. Es wird erkannt, dass bei Zuführung von lignozellulosem Material in einen bei hohem Druck betriebenen Kocher, eine gleichmäßige und verlässliche Kompression zur Ausbildung einer Abdichtung erforderlich ist. Die WO 2016/036300 A1 führt eine spezielle Ausgestaltung der Wendel aus.

Die DE 102008012156 A1 beschreibt einen Schneckenförderer zur Einspeisung von Biomasse in einen Druckbehälter, wobei die Größe der Dichtzone durch eine regelbare Gegendruckeinrichtung, bestehend aus einem konischen Rohrstück, Presszylindern und Verstelleinrichtungen, folgt.

Die DE 35 45 339 A1 enthüllt einen Schneckenförderer für den Transport feinzerteilter fester Stoffe, wobei das Schneckenrohr mit einer aus einem flexiblen Material bestehenden Hülse ausgekleidet ist, an der das Schneckengewinde anliegt, wobei das Schneckenrohr und/oder die Schneckenwelle mit dem Schneckengewinde axial verschiebbar sind.

Die WO 2016139000 A1 beschreibt eine Vorrichtung und Verfahren zur Förderung von Schüttgut in einen Druckraum, wobei im unteren Bereich des Gehäuses eine Auslassöffnung umfangsseitig angeordnet ist, welche durch eine Hülse, die im Bereich der Auslassöffnung des Gehäuses angeordnet ist, verschlossen oder in ihrer Größe verändert werden kann.

Die US 2428 995 beschreibt eine Vorrichtung zum Transport eines körnigen Materials in eine Zone mit hohem Druck umfassend einen Zufuhrhals mit einer elastischen Auskleidung und einem Ventilmittel zum Verschließen des Zufuhrhalsauslasses, wobei das Ventilmittel ein Lippe aufweist, die sich vom benachbarten Ende der elastischen Auskleidung erstreckt.

Die WO2015081443A1 beschreibt eine Vorrichtung und ein Verfahren zur Regelung des Gegendrucks in einem Schneckenförderer mit einer deformierbaren Regelvorrichtung.

Die WO2016036300A1 offenbart eine Stopfschnecke mit einer verbesserten Zuführung des Förderguts, wobei die Wendel im Eintrittsbereich eine Zahnung umfasst.

Ziel der Erfindung ist eine verbesserte Möglichkeit zur Regelung der Dichtheit zwischen zwei Prozessschritten, und insbesondere der Dichtheit eines mit einem Fördergut beschickten Überdruckbereichs und / oder der Dichtheit eines Überdruckbereichs aus dem ein Fördergut ausgeführt wird. Ziel ist weiter unter Einhaltung der geforderten Dichtheit die Ermöglichung einer optimierten Entwässerung oder aber einer Ausregelung des Einflusses eines inhomogenen Förderguts, das z.B. ungleichmäßig der Stopfschnecke zugeführt wird oder das stark streuende Guteigenschaften aufweist. Ziel ist auch bei Verschleiß der Schnecke oder der Spule weiterhin die Dichtheit zwischen den Prozessschritten einstellen zu können, bzw. die Leistungsaufnahme der Stopfschnecke unter Einhaltung des Erfordernisses der Dichtheit zwischen den Prozessschritten zu minimieren.

Dies gelingt erfindungsgemäß dadurch, dass die Dichtheit des Stopfens durch eine relative Positionierung der Schnecke zu der Spule geregelt wird. Die Spule ("plug pipe") ist im Austrittsbereich der Stopfschnecke im Gehäuse angeordnet, und weist eine zumindest teilweise ringförmige und/oder zumindest teilweise kegelstumpfförmige Struktur auf. Die Schnecke erstreckt sich bis in die Spule, wobei die Schnecke um eine Rotationsachse drehbar angeordnet ist und die Schnecke innerhalb der Spule einen wendelfreien Bereich zur Ausbildung des Stopfens aufweist. Die Spule ist im Regelfall austauschbar, da so einfach bei Verschleiß ein Austausch erfolgen kann, bzw. weil durch Austausch der Spule verschiedene Geometrien ausgebildet werden können. Die relative Positionierung der Schnecke zu der Spule erlaubt den Bereich zwischen Spule und Schnecke zu beeinflussen. So kann der Bereich zwischen Spule und Schnecke und insbesondere der Spalt am Ende der Schnecke hin zur Spule entweder verengt oder erweitert werden. Durch eine Verengung des Bereichs bzw. des Spalts wird die Dichtwirkung des Stopfens vergrößert und durch eine Erweiterung des Bereichs bzw. des Spalts wird die Dichtwirkung des Stopfens verringert. Es wird zur Regelung der Dichtheit die Schnecke axial entlang der Rotationsachse in dem Gehäuse verschoben. Dabei sind Gehäuse und Spule ortsfest und die Schnecke wird axial verschoben, wodurch der Bereich zwischen Spule und Schnecke und insbesondere der Spalt am Ende der Schnecke hin zur Spule entweder weiter verengt oder erweitert wird. Eine Verschiebung der Schnecke kann dadurch realisiert werden, dass die Lagereinheit der Schnecke verschiebbar ausgeführt wird, wobei die Lagereinheit die Welle der Schnecke aufnimmt und gegenüber dem Austrittsbereich angeordnet ist. Dabei wird die Schnecke über einen ortsfesten Antrieb angetrieben, wobei zwischen der Lagereinheit der Schnecke und dem Antrieb eine Kupplung ausgeführt ist, die die axiale Verschiebung der Schnecke aufnehmen kann. Weiter wird das Fördergut zwischen dem Einlassbereich und dem Austrittsbereich zwischen dem Gehäuse und der zumindest teilweise eine Wendel umfassenden Schnecke verdichtet, wobei der Stopfen im Austrittsbereich zwischen der Spule und einem wendelfreien Bereich der Schnecke gebildet wird. Im Bereich der Spule kann die Schnecke teilweise einen Bereich mit einer Wendel aufweisen, wobei auf diesen Bereich der Schnecke mit einer Wendel in Förderrichtung der wendelfreie Bereich der Schnecke folgt.

Eine weitere günstige Ausgestaltung der Erfindung ist dadurch gekennzeichnet, dass der Stopfen im Austrittsbereich einen Ringbereich durchläuft, wobei der Ringbereich durch einen Bereich der Spule mit einem konstanten Innendurchmesser und durch einen wendelfreien Bereich der Schnecke mit konstantem Außendurchmesser gebildet wird. In diesem Ringbereich bildet sich insbesondere der Stopfen aus, wobei in diesem Bereich noch keine Regelung der Eigenschaften des Stopfens bzw. der Dichtwirkung durch den Stopfen erfolgt. Vorteilhafterweise durchläuft der Stopfen zunächst den Ringbereich zur Ausbildung des dichtenden Stopfens und danach einen Kalibrierbereich zur Einstellung der Eigenschaften des Stopfens.

Die Erfindung ist weiter dadurch gekennzeichnet, dass der Stopfen im Austrittsbereich nach dem Ringbereich einen Kalibrierbereich durchläuft, wobei der Kalibrierbereich entweder durch einen Bereich der Spule mit einem in Förderrichtung abnehmenden Innendurchmesser und durch einen wendelfreien Bereich der Schnecke mit einem gleichbleibenden oder abnehmenden Außendurchmesser gebildet wird oder der Kalibrierbereich durch einen Bereich der Spule mit einem in Förderrichtung gleichbleibenden oder zunehmenden Innendurchmesser und durch einen wendelfreien Bereich der Schnecke mit einem zunehmenden Außendurchmesser gebildet wird. Sofern der Kalibrierbereich durch einen Bereich der Spule mit einem in Förderrichtung gleichbleibenden Innendurchmesser und durch einen wendelfreien Bereich der Schnecke mit einem zunehmenden Außendurchmesser gebildet wird, schließt sich an die Spule ein Bereich mit einem Durchmesser, der größer ist als der gleichbleibende Innendurchmesser der Spule, an. Dabei kann der wendelfreie Bereich der Schnecke mit dem zunehmenden Außendurchmesser innerhalb der Spule oder im Bereich mit dem Durchmesser, der größer ist als der gleichbleibende Innendurchmesser der Spule, positioniert sein, wobei natürlich auch eine Positionierung zwischen diesen Positionen möglich ist. Durch die relative Positionierung von Spule und Schnecke wird im Kalibrierbereich ein bestimmter Abstand zwischen Spule und Schnecke eingestellt und insbesondere ein bestimmter Spalt am Ende der Schnecke hin zur Spule. Durch die relative Positionierung von Spule und Schnecke kann der Kalibrierbereich entweder verengt oder erweitert werden. Ein Bereich der Spule mit einem abnehmenden Innendurchmesser kann durch eine konische Spulenform - wobei die gedachte Konusspitze zum Austrittsbereich zeigt - realisiert werden. Es ist dann der wendelfreie Bereich der Schnecke mit einem gleichbleibenden Durchmesser oder mit einem abnehmenden Außendurchmesser konisch ausgebildet - wobei die gedachte Konusspitze wieder zum Austrittsbereich zeigt. Durch die relative Verschiebung der ineinanderliegenden Konusflächen wird der Abstand zueinander und die Eigenschaft des Stopfens direkt beeinflusst und so auch die Dichtwirkung durch den Stopfen direkt geregelt. Ein Bereich der Spule mit einem zunehmenden Innendurchmesser kann durch eine konische Spulenform - wobei die gedachte Konusspitze zum Einlassbereich zeigt - realisiert werden. Es ist dann der wendelfreie Bereich der Schnecke mit einem zunehmenden Außendurchmesser konisch ausgebildet, wobei die gedachte Konusspitze wieder zum Einlassbereich zeigt. Vorteilhafterweise kann so durch die axiale Verschiebung der Schnecke die Dichtwirkung des Stopfens entweder durch eine Verengung des Kalibrierbereichs vergrößert oder durch eine Erweiterung des Kalibrierbereichs verringert werden.

Gegenstand der Erfindung ist auch eine Stopfschnecke zur Förderung eines Förderguts, z.B. Hackschnitzel, in einen Überdruckbereich (1) oder aus einem Überdruckbereich (1), gemäß Patentanspruch 6. Dabei ist die Schnecke axial entlang der Rotationsachse und relativ zu dem Gehäuse verschiebbar und die Schnecke umfasst zumindest teilweise eine Wendel, wobei die Schnecke im Bereich der Spule zumindest teilweise als wendelfreier Bereich ausgebildet ist. Weiter ist vorteilhafterweise zwischen Spule und Schnecke ein Ringbereich ausgebildet, wobei der Ringbereich einen Bereich der Spule mit einem konstanten Innendurchmesser und einen wendelfreien Bereich der Schnecke mit konstantem Außendurchmesser umfasst.

Eine ebenso vorteilhafte Ausführung der Stopfschnecke ist dadurch gekennzeichnet, dass zwischen Spule und Schnecke ein Kalibrierbereich ausgebildet ist, wobei der Kalibrierbereich entweder einen Bereich der Spule mit einem in Förderrichtung abnehmenden Innendurchmesser und einen wendelfreien Bereich der Schnecke mit einem gleichbleibenden oder abnehmenden Außendurchmesser umfasst oder der Kalibrierbereich einen Bereich der Spule mit einem in Förderrichtung gleichbleibenden oder zunehmenden Innendurchmesser und einen wendelfreien Bereich der Schnecke mit einem zunehmenden Außendurchmesser umfasst. Sofern der Kalibrierbereich durch einen Bereich der Spule mit einem in Förderrichtung gleichbleibenden Innendurchmesser und durch einen wendelfreien Bereich der Schnecke mit einem zunehmenden Außendurchmesser gebildet wird, schließt sich an die Spule ein Bereich mit einem Durchmesser, der größer ist als der gleichbleibende Innendurchmesser der Spule, an. Der abnehmende bzw. zunehmende Bereich der Schnecke bzw. der Spule kann durch eine konische Gestaltung der Spule bzw. der Schnecke gebildet werden. Entsprechend diesen Ausführungen erlaubt die axiale Positionierung der Schnecke zur Spule eine Verkleinerung oder eine Vergrößerung des Kalibrierbereichs.

Die Erfindung wird nun anhand der Zeichnungen beispielhaft beschrieben.
Fig. 1 zeigt eine Stopfschnecke zur Beschickung eines Überdruckbereichs entsprechend dem Stand der Technik.
Fig. 2 zeigt eine erfindungsgemäße Ausbildung der Stopfschnecke mit einer ersten relativen Positionierung der Schnecke zu der Spule.
Fig. 3 zeigt eine erfindungsgemäße Ausbildung der Stopfschnecke mit einer zweiten relativen Positionierung der Schnecke zu der Spule.
Fig. 4 zeigt eine weiter erfindungsgemäße Ausbildung der Stopfschnecke.

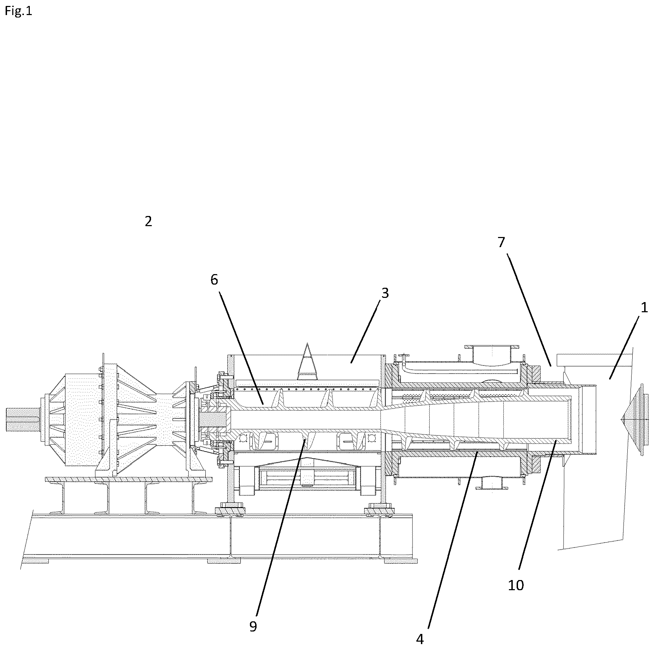

Fig. 1 zeigt eine Stopfschnecke zur Beschickung eines Überdruckbereichs entsprechend dem Stand der Technik. Dabei wird dem Überdruckbereich1 das Fördergut über den Einlassbereich 3 der Stopfschnecke 2 zugeführt, wobei die Stopfschnecke 2 ein Gehäuse 4, eine um eine Rotationsachse 5 drehbare Schnecke 6, die zumindest teilweise eine Wendel 9 aufweist, einen Austrittsbereich 7 und eine Spule 8 aufweist. Im Bereich der Spule 8 weist die die Schnecke 6 einen wendelfreien Bereich 10 auf.

Nicht dargestellt, aber ebenso im Sinne der Erfindung, ist eine Stopfschnecke zur Förderung eines Förderguts aus einem Überdruckbereich. In diesem Fall ist der Einlassbereich im Überdruckbereich angeordnet oder an den Überdruckbereich verbunden, wobei das Fördergut aus dem Überdruckbereich zu dem Austrittsbereich der Stopfschnecke unter Ausbildung eines Stopfens gefördert wird.

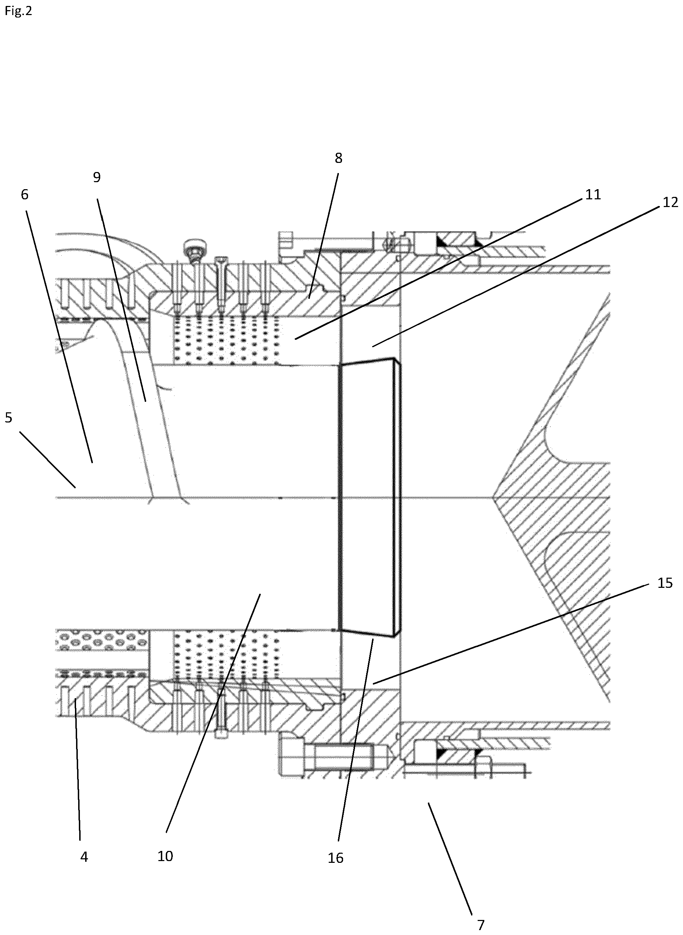

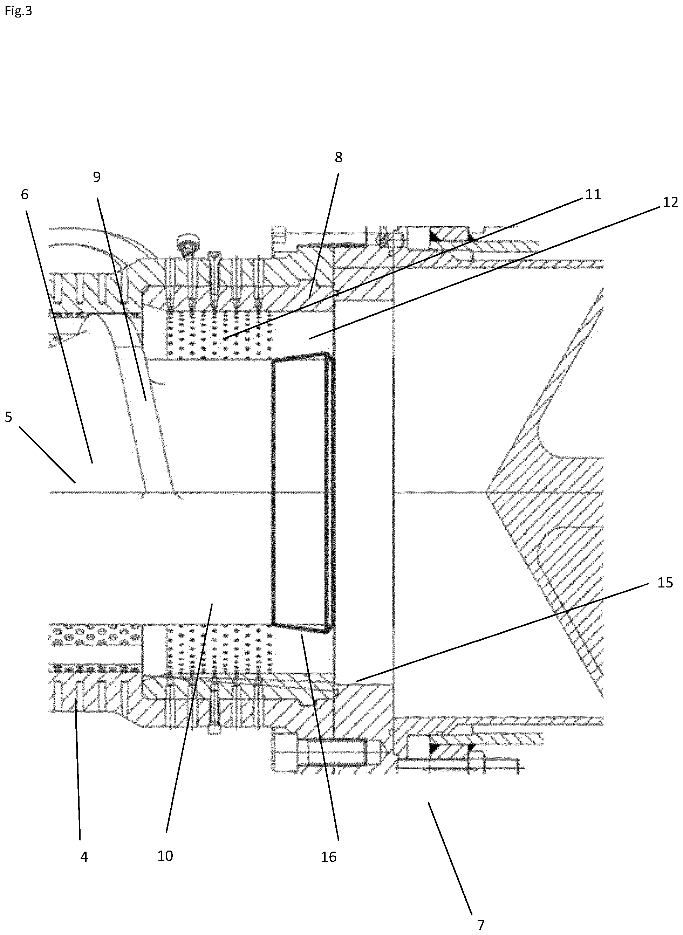

Fig. 2 und Fig. 3 zeigen eine erfindungsgemäße Ausbildung der Stopfschnecke, wobei Fig. 2 eine erste relative Positionierung der Schnecke zu der Spule und Fig. 3 eine zweite relative Positionierung der Schnecke zu der Spule zeigt. Dabei ist in einem Gehäuse 4 eine um eine Rotationsachse 5 drehbare Schnecke 6, die zumindest teilweise eine Wendel 9 aufweist, angeordnet. Im Austrittsbereich 7 weist die Schnecke 6 einen wendelfreien Bereich 10 innerhalb der Spule 8 auf, wobei die Spule 8 und die wendelfreie Schnecke10 einen Ringbereich 11 ausbilden und dem Ringbereich 11 in Förderrichtung des Förderguts ein Kalibrierbereich 12 folgt. Weiter ist der wendelfreie Bereich der Schnecke mit zunehmenden Außendurchmesser 16 konisch ausgeführt, wobei die gedachte Konusspitze zum Einlassbereich zeigt und die Spule 8 in Förderrichtung einen gleichbleibenden Innendurchmesser aufweist. Der Kalibrierbereich wird durch den Bereich der Spule mit gleichbleibenden Innendurchmesser und durch den wendelfreien Bereich 16 der Schnecke mit einem zunehmenden Außendurchmesser gebildet, wobei sich an die Spule ein Bereich 15 mit einem Durchmesser, der größer ist als der gleichbleibende Innendurchmesser der Spule, anschließt. Dabei ist in Fig. 2 der wendelfreie Bereich 16 der Schnecke mit dem zunehmenden Außendurchmesser im Bereich 15 mit dem Durchmesser, der größer ist als der gleichbleibende Innendurchmesser der Spule, positioniert, bzw. in Fig. 3 ist der wendelfreie Bereich 16 der Schnecke mit dem zunehmenden Außendurchmesser in der Spule 8 positioniert. Vorteilhafterweise kann so durch die axiale Verschiebung der Schnecke 6 die Dichtwirkung des Stopfens entweder durch eine Verengung des Kalibrierbereichs 12 vergrößert oder durch eine Erweiterung des Kalibrierbereichs 12 verringert werden. Dabei zeigt Fig.2 die Stopfschnecke 2 mit einer relativen Positionierung der Schnecke 6 weiter in Förderrichtung des Förderguts, d.h. näher am Austrittsbereich 7. Und umgekehrt zeigt Fig.3 die Stopfschnecke 2 mit einer relativen Positionierung der Schnecke 6 entgegen der Förderrichtung des Förderguts, d.h. näher am Einlassbereich 3. Somit ist der Kalibrierbereich 12 in Fig. 3 kleiner als in Fig. 2, womit die Positionierung der Schnecke 6 in Fig. 3 zu einem Stopfen mit größerer Dichtwirkung führt und die Positionierung der Schnecke 6 in Fig. 2 zu einem Stopfen mit kleinerer Dichtwirkung führt.

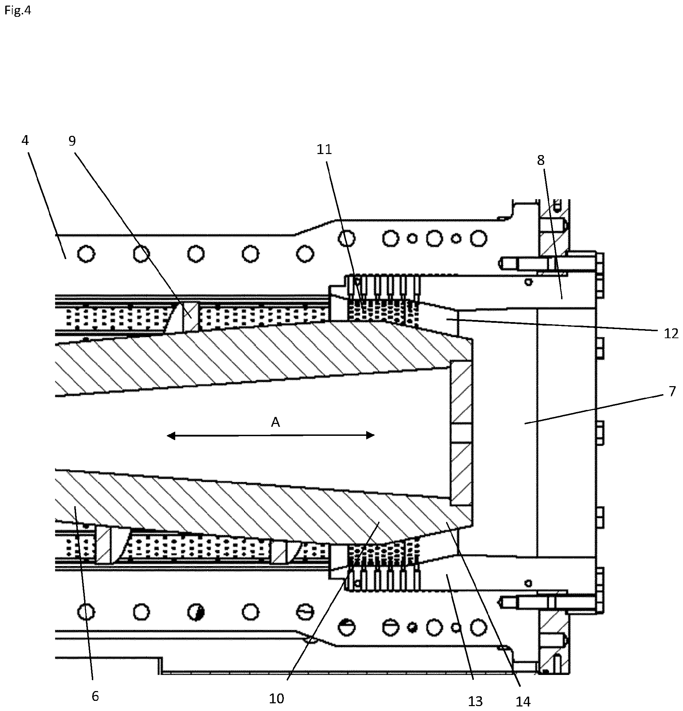

Fig. 4 zeigt eine weitere erfindungsgemäße Ausbildung der Stopfschnecke, wobei die Schnecke 6 in einem Gehäuse 4 drehbar angeordnet ist und die Schnecke 6 zumindest teilweise eine Wendel 9 aufweist. Im Austrittsbereich 7 weist die Schnecke 6 einen wendelfreien Bereich 10 innerhalb der Spule 8 auf, wobei die Spule 8 und die wendelfreie Schnecke 10 einen Ringbereich 11 ausbilden und dem Ringbereich 11 in Förderrichtung des Förderguts ein Kalibrierbereich 12 folgt. Weiter ist der wendelfreie Bereich 14 der Schnecke mit einem in Förderrichtung abnehmenden Außendurchmesser konisch ausgeführt, wobei die gedachte Konusspitze zum Austrittsbereich 7 zeigt, und die Spule 8 weist einen Bereich 13 mit einem abnehmenden Innendurchmesser auf. Dabei verdeutlicht Pfeil A die Möglichkeit zur relativen Positionierung der Schnecke 6 zur Spule 8.

Die vorliegende Erfindung bietet somit zahlreiche Vorteile: eine effektive Möglichkeit zur Regelung der Dichtheit zwischen zwei Prozessschritten und insbesondere der Dichtheit eines Überdruckbereichs, wobei der Überdruckbereich mit einem Fördergut beschickt wird oder das Fördergut aus dem Überdruckbereich ausgeführt wird. So wird effektiv die Gefahr des Rückströmens bzw. des Auströmens von z.B. Dampf aus dem Überdruckbereich minimiert. Und es wird eine optimierte Entwässerungsleistung bei gleichzeitig regelbarer Einhaltung der Dichtheit möglich. Es kann auch eine Fahrweise gewählt werden, bei der eine geforderte Dichtheit einstellbar ist, die aber eine minimale Leistungsaufnahme der Stopfschnecke aufweist. So kann der Verschleiß an Stopfschnecke, Spule, etc. minimiert werden, bzw. umgekehrt nach erfolgtem Verschleiß an Stopfschnecke, Spule, etc. kann weiterhin eine geforderte Dichtheit eingestellt werden, wodurch eine verlängerte Nutzung möglich wird, da ein Austausch der verschlissenen Komponenten später erfolgen kann. Ebenso kann auch der Einfluss eines inhomogenen Förderguts, da es z.B. ungleichmäßig der Stopfschnecke zugeführt wird, von sich aus stark streuende Guteigenschaften oder eine veränderliche Zusammensetzung aufweist, kompensiert werden, wobei die geforderte Dichtheit jeweils eingestellt werden kann. Weiter erlaubt die erfindungsgemäße Lösung ein schnelles Anfahren der Stopfschnecke bei geringer Leistungsaufnahme, wobei die Einhaltung der Dichtheit geregelt bzw. schnell eingestellt werden kann.

### Bezugszeichen

- 1: Überdruckbereich
- 2: Stopfschnecke
- 3: Einlassbereich
- 4: Gehäuse
- 5: Rotationsachse
- 6: Schnecke
- 7: Austrittsbereich
- 8: Spule
- 9: Wendel
- 10: wendelfreier Bereich der Schnecke
- 11: Ringbereich
- 12: Kalibrierbereich
- 13: Bereich der Spule mit einem abnehmenden Innendurchmesser
- 14: wendelfreier Bereich der Schnecke mit einem abnehmenden Außendurchmesser
- 15: Bereich mit einem Durchmesser, der größer ist als der gleichbleibende Innendurchmesser der Spule
- 16: wendelfreier Bereich der Schnecke mit einem zunehmenden Außendurchmesser

## Patentansprüche

1. Verfahren zur Förderung eines Förderguts, z.B. Hackschnitzel, in einen Überdruckbereich (1) oder aus einem Überdruckbereich (1), wobei das Fördergut dem Überdruckbereich (1) über eine Stopfschnecke (2) nach einem der Ansprüche 6 bis 8 zugeführt wird und/oder aus dem Überdruckbereich (1) über die Stopfschnecke (2) ausgeführt wird, die Stopfschnecke (2) das Fördergut im Einlassbereich (3) aufnimmt, die in dem Gehäuse (4) um die Rotationsachse (5) rotierende Schnecke (6) das Fördergut zu dem Austrittsbereich (7) fördert, wobei das Fördergut zwischen der Spule (8) und der Schnecke (6) zu einem gasdichten und flüssigkeitsdichten Stopfen verdichtet wird, und zur Förderung des Förderguts in den Überdruckbereich (1) der Stopfen dem Überdruckbereich (1) zugeführt wird und/oder zur Förderung des Förderguts aus dem Überdruckbereich (1) das zu dem Stopfen verdichtete Fördergut aus dem Überdruckbereich (1) ausgeführt wird, wobei der Stopfen den Überdruckbereich (1) gegen die Stopfschnecke (2) abdichtet, **dadurch gekennzeichnet, dass** die Dichtheit des Stopfens durch eine relative Positionierung der Schnecke (6) zu der Spule (8) geregelt wird, wobei die Schnecke (6) axial entlang der Rotationsachse (5) in dem Gehäuse (4) verschoben wird und das Fördergut zwischen dem Einlassbereich (3) und dem Austrittsbereich (7) zwischen dem Gehäuse (4) und der zumindest teilweise die Wendel (9) umfassenden Schnecke (6) verdichtet wird, wobei der Stopfen im Austrittsbereich (7) zwischen der Spule (8) und dem wendelfreien Bereich (10) der Schnecke (6) gebildet wird.

2. Verfahren nach Anspruch 1, **dadurch gekennzeichnet, dass** der Stopfen zunächst einen Ringbereich (11) und danach einen Kalibrierbereich (12) durchläuft.

3. Verfahren nach Anspruch 1, **dadurch gekennzeichnet, dass** der Stopfen im Austrittsbereich (7) einen Ringbereich (11) durchläuft, wobei der Ringbereich (11) durch einen Bereich der Spule (8) mit einem konstanten Innendurchmesser und durch einen wendelfreien Bereich (10) der Schnecke (6) mit konstantem Außendurchmesser gebildet wird.

4. Verfahren nach Anspruch 1, **dadurch gekennzeichnet, dass** der Stopfen im Austrittsbereich (7) nach einem Ringbereich (11) einen Kalibrierbereich (12) durchläuft, wobei der Kalibrierbereich (12) entweder durch einen Bereich (13) der Spule mit einem abnehmenden Innendurchmesser und durch einen wendelfreien Bereich der Schnecke mit einem gleichbleibenden Außendurchmesser oder einen wendelfreien Bereich (14) der Schnecke mit einem abnehmenden Außendurchmesser gebildet wird oder der Kalibrierbereich (12) durch einen Bereich der Spule mit einem gleichbleibenden oder zunehmenden Innendurchmesser und durch einen wendelfreien Bereich (16) der Schnecke mit einem zunehmenden Außendurchmesser gebildet wird.

5. Verfahren nach Anspruch 2, **dadurch gekennzeichnet, dass** durch die axiale Verschiebung der Schnecke (6) die Dichtwirkung des Stopfens entweder durch eine Verengung des Kalibrierbereichs (12) vergrößert oder durch eine Erweiterung des Kalibrierbereichs (12) verringert wird.

6. Stopfschnecke zur Verdichtung eines Förderguts zu einem gasdichten und flüssigkeitsdichten Stopfen und zur Förderung des Förderguts, z.B. Hackschnitzel, in einen Überdruckbereich (1) oder aus einem Überdruckbereich (1), umfassend einen Einlassbereich (3) zur Aufnahme des Förderguts, eine in einem Gehäuse (4) um eine Rotationsachse (5) drehbare Schnecke (6) und einen Austrittsbereich (7), wobei im Austrittsbereich (7) die Schnecke (6) innerhalb einer Spule (8) drehbar angeordnet ist und der Austrittsbereich (7) für einen Austritt des Förderguts im Wesentlichen in Richtung der Rotationsachse (5) ausgestaltet ist, **dadurch gekennzeichnet, dass** die Spule (8) als "plug pipe" und somit als Rohr für einen Stopfen ausgebildet ist und eine zumindest teilweise ringförmige und/oder zumindest teilweise kegelstumpfförmige Struktur aufweist, wobei die Schnecke (6) und die Spule (8) relativ zueinander bewegbar und positionierbar sind, wobei die Schnecke (6) axial entlang der Rotationsachse (5) und relativ zu dem Gehäuse (4) verschiebbar ist und die Schnecke (6) zumindest teilweise eine Wendel (9) umfasst, wobei die Schnecke (6) im Bereich der Spule (8) zumindest teilweise als wendelfreier Bereich (10) ausgebildet ist und zwischen Spule (8) und Schnecke (6) ein Kalibrierbereich (12) ausgebildet ist, wobei der Kalibrierbereich (12) entweder einen Bereich (13) der Spule mit einem abnehmenden Innendurchmesser und einen wendelfreien Bereich der Schnecke mit einem mit einem gleichbleibenden Außendurchmesser oder einen wendelfreien Bereich (14) der Schnecke mit einem abnehmenden Außendurchmesser umfasst oder der Kalibrierbereich (12) einen Bereich der Spule mit einem gleichbleibenden oder zunehmenden Innendurchmesser und einen wendelfreien Bereich der Schnecke mit einem zunehmenden Außendurchmesser (16) umfasst.

7. Stopfschnecke nach Anspruch 6, **dadurch gekennzeichnet, dass** zwischen Spule (8) und Schnecke (6) ein Ringbereich (11) ausgebildet ist, wobei der Ringbereich (11) einen Bereich der Spule (8) mit einem konstanten Innendurchmesser und einen wendelfreien Bereich (10) der Schnecke (6) mit konstantem Außendurchmesser umfasst.

8. Stopfschnecke nach Anspruch 6, **dadurch gekennzeichnet, dass** über die axiale Positionierung der Schnecke (6) zur Spule (8) eine Verkleinerung des Kalibrierbereichs (12) oder eine Vergrößerung des Kalibrierbereichs (12) erzielbar ist.

## Claims

1. Method for conveying a material to be conveyed, for example wood chips, into an overpressure area (1) or out of an overpressure area (1), the conveyed material being fed to the overpressure area (1) through a plug screw feeder (2) according to one of claims 6 to 8 and/or discharged from the overpressure area (1) through the plug screw feeder (2), the plug screw feeder (2) receiving the conveyed material in the inlet area (3), the screw (6) that rotates round the axis of rotation (5) inside the housing (4) conveying the conveyed material to the discharge area (7), where the conveyed material is compressed between the plug pipe (8) and the screw (6) to form a gas-tight and liquid-tight plug, and the plug is fed to the overpressure area (1) in order to convey the conveyed material into the overpressure area (1) and/or the conveyed material compressed to form the plug is discharged from the overpressure area (1) in order to convey the conveyed material out of the overpressure area (1), the plug forming a seal between the overpressure area (1) and the plug screw feeder (2), **characterised in that** the tightness of the plug is controlled by relative positioning of the screw (6) to the plug pipe (8), the screw (6) being moved in axial direction along the axis of rotation (5) inside the housing (4) and the material conveyed being compressed between the inlet area (3) and the discharge area (7) between the housing (4) and the screw (6) at least partially comprising the flight (9), where the plug is formed in the discharge area (7) between the plug pipe (8) and the area (10) of the screw (6) with no flight.

2. Method according to claim 1, **characterised in that** the plug passes first of all through a ring area (11) and then through a calibrating area (12).

3. Method according to claim 1, **characterised in that** the plug passes through a ring area (11) in the discharge area (7), the ring area (11) being formed by an area of the plug pipe (8) with a constant inner diameter and by an area (10) of the screw (6) with no flight and with a constant outer diameter.

4. Method according to claim 1, **characterised in that** the plug passes through a calibrating area (12) after a ring area (11) in the discharge area (7), the calibrating area (12) being formed either by an area (13) of the plug pipe with a decreasing inner diameter and an area of the screw with no flight and with a constant outer diameter or an area (14) of the screw with no flight and a decreasing outer diameter or the calibrating area (12) being formed by an area of the plug pipe with a constant or increasing inner diameter and by an area (16) of the screw with no flight and with an increasing outer diameter.

5. Method according to claim 2, **characterised in that** the sealing effect of the plug can be increased by narrowing the calibrating area (12) or reduced by widening the calibrating area (12) by moving the screw (6) in axial direction.

6. Plug screw feeder for compressing a conveyed material into a gas-tight and liquid-tight plug and conveying the conveyed material, for example wood chips, into an overpressure area (1) or out of an overpressure area (1), comprising an inlet area (3) for receiving the conveyed material, a screw (6) rotatable round an axis of rotation (5) in a housing (4) and a discharge area (7), the screw (6) being disposed rotatably inside a plug pipe (8) in the discharge area (7) and the discharge area (7) being designed for discharge of the conveyed material essentially in the direction of the axis of rotation (5), **characterised in that** the plug pipe (8) is thus formed as a pipe for a plug and has at least in places a ring-shaped and/or truncated cone structure, the screw (6) and the plug pipe (8) being suitable for moving and positioning in relation to one another, the screw (6) being movable in axial direction along an axis of rotation (5) and in relation to the housing (4) and the screw (6) at least partially comprising a flight (9) and the screw (6) having at least in places an area (10) with no flight, in the area of the plug pipe (8) and a calibrating area (12) being formed between plug pipe (8) and screw (6), where the calibrating area (12) comprises either an area (13) of the plug pipe with a decreasing diameter and an area of the screw with no flight and with a constant outer diameter or an area (14) of the screw with no flight and with a decreasing outer diameter, or the calibrating area (12) comprises an area of the plug pipe with a constant or increasing inner diameter and an area of the screw with no flight and with an increasing outer diameter (16).

7. Plug screw feeder according to claim 6, **characterised in that** a ring area (11) is formed between plug pipe (8) and screw (6), the ring area (11) comprising an area of the plug pipe (8) with a constant inner diameter and an area (10) of the screw (6) with no flight and with a constant outer diameter.

8. Plug screw feeder according to claim 6, **characterised in that** the calibrating area (12) can be reduced or increased in size via axial positioning of the screw (6) to the plug pipe (8).

## Revendications

1. Procédé destiné à acheminer un matériau devant être acheminé, par exemple des copeaux de bois, dans une zone de surpression (1) ou à le faire sortir de la zone de surpression (1), le matériau acheminé étant acheminé dans la zone de surpression (1) par un distributeur à vis à obturation (2) selon l'une quelconque des revendications 6 à 8 et/ou étant évacué de la zone de surpression (1) par le distributeur à vis à obturation (2), le distributeur à vis à obturation (2) recevant le matériau acheminé dans la zone d'entrée (3), la vis (6) en rotation autour de l'axe de rotation (5) à l'intérieur du logement (4) acheminant le matériau acheminé dans la zone d'évacuation (7), le matériau acheminé étant comprimé entre le tuyau d'obturation (8) et la vis (6) pour former une obturation étanche au gaz et étanche au liquide, et l'obturation étant acheminée dans la zone de surpression (1) afin d'acheminer le matériau acheminé dans la zone de surpression (1) et/ou le matériau acheminé comprimé pour former l'obturation étant évacué de la zone de surpression (1) afin de sortir le matériau acheminé de la zone de surpression (1), l'obturation formant une étanchéité entre la zone de surpression (1) et le distributeur à vis à obturation (2), **caractérisé en ce que** l'étanchéité de l'obturation est réglée par le positionnement relatif de la vis (6) par rapport au tuyau d'obturation (8), la vis (6) étant déplacée dans la direction axiale le long de l'axe de rotation (5) à l'intérieur du logement (4) et le matériau acheminé étant comprimé entre la zone d'entrée (3) et la zone de sortie (7) entre le logement (4) et la vis (6) renfermant au moins à certains endroit la tige hélicoïdale (9), l'obturation étant formée dans la zone de sortie (7) entre le tuyau d'obturation (8) et la zone (10) de la vis (6) exempte de tige hélicoïdale.

2. Procédé selon la revendication 1, **caractérisé en ce que** l'obturation traverse en premier lieu une zone annulaire (11) et ensuite une zone d'étalonnage (12).

3. Procédé selon la revendication 1, **caractérisé en ce que** l'obturation traverse une zone annulaire (11) dans la zone de sortie (7), la zone annulaire (11) étant formée par une zone du tuyau d'obturation (8) ayant un diamètre intérieur constant et par une zone (10) de la vis (6) exempte de tige hélicoïdale et ayant un diamètre extérieur constant.

4. Procédé selon la revendication 1, **caractérisé en ce que** l'obturation traverse une zone d'étalonnage (12) après la zone annulaire (11) dans la zone de sortie (7), la zone d'étalonnage (12) étant formée soit par une zone (13) du tuyau d'obturation ayant un diamètre intérieur décroissant et par une zone de la vis exempte de tige hélicoïdale et ayant un diamètre extérieur constant soit par une zone (14) de la vis exempte de tige hélicoïdale et ayant un diamètre extérieur décroissant ou la zone d'étalonnage (12) est formée par une zone du tuyau d'obturation ayant un diamètre intérieur constant ou croissant et par une zone (16) de la vis exempte de tige hélicoïdale et ayant un diamètre extérieur croissant.

5. Procédé selon la revendication 2, **caractérisé en ce que** l'effet d'étanchéité de l'obturation peut être augmenté par rétrécissement de la zone d'étalonnage (12) ou réduit par élargissement de la zone d'étalonnage (12) en déplaçant la vis (6) dans la direction axiale.

6. Distributeur à vis à obturation destiné à comprimer un matériau acheminé en une obturation étanche au gaz et étanche au liquide et destiné à acheminer le matériau acheminé, par exemple, des copeaux de bois, dans une zone de surpression (1) ou de le faire sortir d'une zone de surpression (1), comprenant une zone d'entrée (3) destinée à recevoir le matériau acheminé, une vis (6) pouvant tourner autour d'un axe de rotation (5) dans un logement (4) et une zone de sortie (7), la vis (6) étant montée en rotation à l'intérieur d'un tuyau d'obturation (8) dans la zone de sortie (7) et la zone de sortie (7) étant conçue pour évacuer le matériau acheminé sensiblement dans la direction de l'axe de rotation (5), **caractérisé en ce que** le tuyau d'obturation (8) est formé en tant que « tuyau pour obturation » et est ainsi formé comme un tube pour une obturation et présente au moins à certains endroits une forme annulaire et/ou une structure en forme de cône tronqué, au moins à certains endroits, la vis (6) et le tuyau d'obturation (8) pouvant se déplacer et pouvant se positionner l'un par rapport à l'autre, la vis (6) pouvant se déplacer dans la direction axiale le long de l'axe de rotation (5) et par rapport au logement (4) et la vis (6) comprenant, au moins à certains endroits, une tige hélicoïdale (9), la vis (6) dans la zone du tuyau d'obturation (8) étant conçue au moins à certains endroits comme une zone (10) exempte de tige hélicoïdale, et une zone d'étalonnage étant formée entre le tuyau d'obturation (8) et la vis (6), la zone d'étalonnage (12) comprenant soit une zone (13) du tuyau d'obturation ayant un diamètre intérieur décroissant et une zone de la vis exempte de tige hélicoïdale et ayant un diamètre extérieur constant soit une zone (14) de la vis exempte de tige hélicoïdale et ayant un diamètre extérieur décroissant, ou la zone d'étalonnage (12) comprend une zone du tuyau d'obturation ayant un diamètre intérieur constant ou croissant et une zone de la vis exempte de tige hélicoïdale et ayant un diamètre extérieur croissant (16).

7. Distributeur à vis à obturation selon la revendication 6, **caractérisé en ce qu'**une zone annulaire (11) est formée entre le tuyau d'obturation (8) et la vis (6), la zone annulaire (11) comprenant une zone du tuyau d'obturation (8) ayant un diamètre intérieur constant et une zone (10) de la vis (6) exempte de tige hélicoïdale et ayant un diamètre extérieur constant.

8. Distributeur à vis à obturation selon la revendication 6, **caractérisé en ce que** le positionnement axial de la vis (6) par rapport au tuyau d'obturation (8) permet de réduire la zone d'étalonnage (12) ou d'agrandir la zone d'étalonnage (12).
